# EUROPEAN PATENT SPECIFICATION

(11) **EP 2 127 937 B1**
(45) Date of publication and mention of the grant of the patent: **27.06.2012**
(21) Application number: 07807024.0
(22) Date of filing: 10.09.2007
(51) Int. Cl.: B60N 2/12, B60N 2/235, B60N 2/30

(54) **VEHICLE SEAT**
FAHRZEUGSITZ
SIEGE DE VEHICULE

(30) Priority: 08.09.2006 JP 2006244776
(43) Date of publication of application: 02.12.2009
(73) Proprietor: TS Tech Co., Ltd., Asaka-shi, Saitama 351-0012 (JP)
(72) Inventor: OMORI, Misao, Tochigi 329-1217 (JP); ITO, Teppei, Tochigi 329-1217 (JP)
(74) Representative: Wilson Gunn
(86) International application number: PCT/JP2007/067615
(87) International publication number: WO 2008/029947

(56) References cited:
- EP-A1- 1 870 278
- JP-A- 2004 359 111
- JP-A- 2005 022 551
- JP-A- 2007 015 599
- US-A1- 2005 253 439
- US-A1- 2006 012 231

## Description

### Technical Field

The present invention relates to a vehicle seat, and more particularly, to a vehicle seat including a walk-in apparatus that moves a vehicle front seat forward to form a riding space between a vehicle rear seat and the vehicle front seat.

### Background Art

A walk-in mechanism according to the related art, which reclines forward a seatback disposed at a seating position to unlock a slide mechanism and thus moving the whole of a vehicle seat forward, is known from JP 2004-155228A. Furthermore, a tip-up mechanism is known, which moves a seat bottom from a normal position to an upright position that is popped up from the normal position, by unlocking a seat bottom lock mechanism.

In addition, a vehicle seat that includes both a walk-in mechanism and a tip-up mechanism, is known from JP 2005-74101A.

### Disclosure of the Invention

In JP 2004-155228A, when a seatback is simply reclined forward, the whole of a seat is moved forward to be in a walk-in state. Thus, since a seat bottom is just moved forward, there are problems that the forward movement amount of a vehicle seat is small, and a rear riding space is not wide.

In JP 2005-74101A, when a seat bottom is simply raised up, the whole of a seat is moved forward to be in a walk-in state. Thus, there are problems that a seatback is still maintained at a seating state, and a riding space behind a vehicle seat is not wide.

A further vehicle seat comprising a reclining mechanism and walk-in mechanism according to the preamble of claim 1 is known, for example, from US 2005/253439 A1.

In accordance with the present invention there is provided a vehicle seat having the characterizing features of claim 1. The seat of the invention is thus configured such that when operating a walk-in function, a tip-up function of a seat bottom is also operated. Accordingly, the forward movement amount of a vehicle seat can be increased. Further features of the invention are disclosed in the independent claims.

### Brief Description of the Drawings

FIG. 1 is a schematic side view illustrating a vehicle seat according to the present invention.
FIG. 2 is a schematic perspective view illustrating a frame configuration of the vehicle seat.
FIG. 3 is an exploded perspective view illustrating a walk-in mechanism according to the present invention.

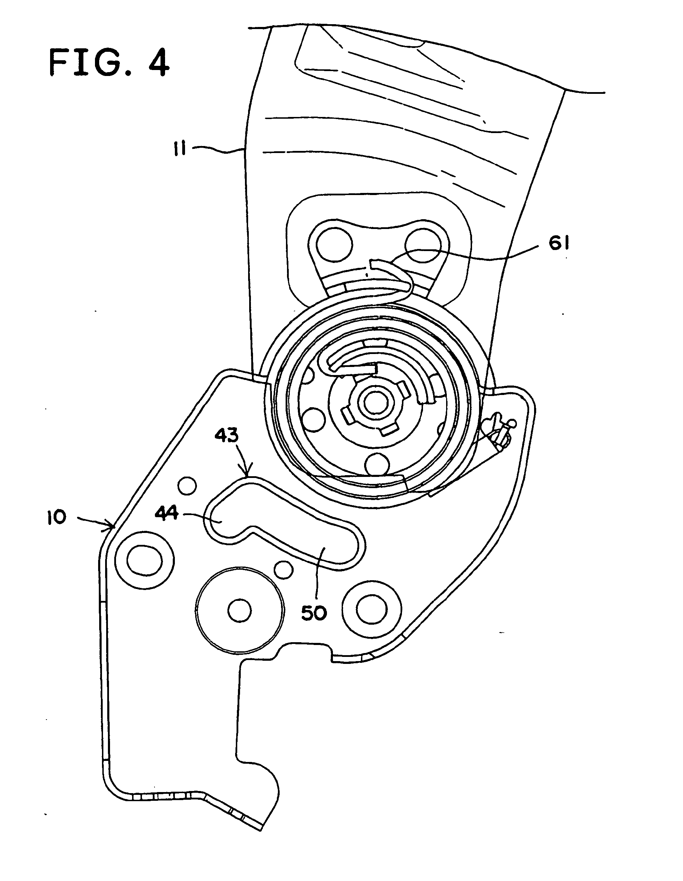

FIG. 4 is a side view illustrating a support frame and a seatback frame of the vehicle seat.

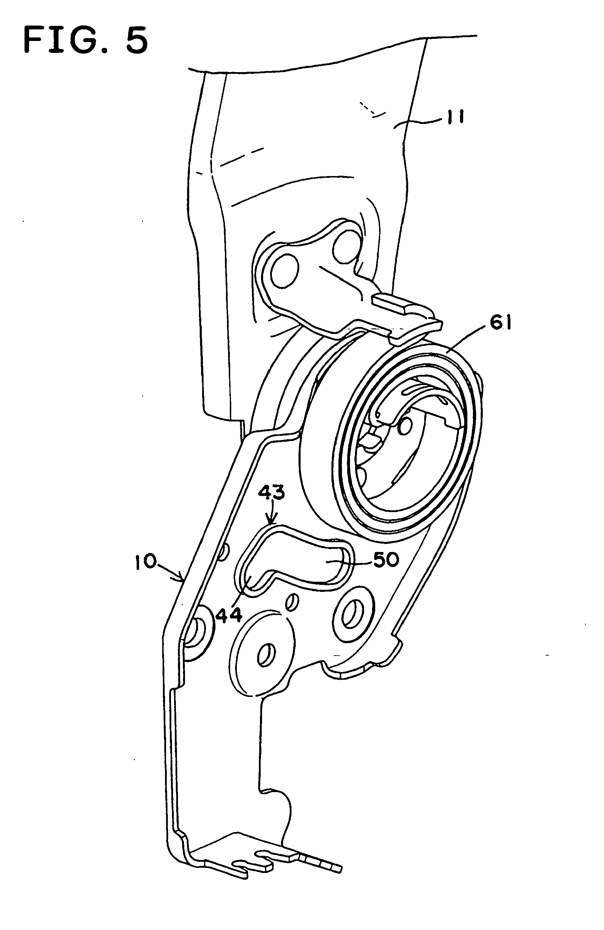

FIG. 5 is a perspective view illustrating the support frame and the seatback frame.
FIG. 6 is a side view illustrating an upright state of a seatback of the vehicle seat.
FIG. 7 is a side view illustrating a rotation arm in the case where the seatback is in the upright state.
FIG. 8 is a perspective view illustrating the rotation arm in the case where the seatback is in the upright state.
FIG. 9 is a side view illustrating the upright state of the seatback.
FIG. 10 is a side view illustrating an unlocked state of a reclining mechanism of the vehicle seat.
FIG. 11 is a side view illustrating a state where the seatback is slightly reclined forward from the state of FIG. 10.
FIG. 12 is a side view illustrating a state where the seatback is further reclined forward from the state of FIG. 11, so that a memory hook of a memory lever is engaged with an unlock engagement surface of the rotation arm.
FIG. 13 is an enlarged side view illustrating the memory lever and the rotation arm in the state of FIG. 12.

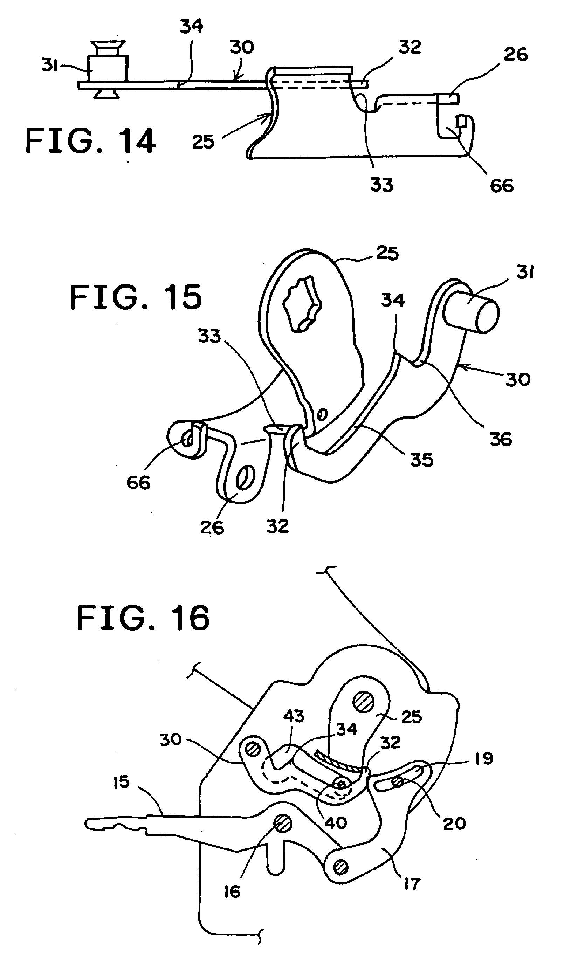

FIG. 14 is a plan view of FIG. 13.
FIG. 15 is a perspective view of FIG. 13.
FIG. 16 is a side view illustrating a state where the seatback of the vehicle seat is reclined forward.
FIG. 17 is a side view illustrating a position of a contact member in the state of FIG. 16.
FIG. 18 is a side view illustrating a state where the seatback is slightly rotated rearward from the state of FIG. 16.
FIG. 19 is a side view illustrating a state of manipulating a reclining lever of the reclining mechanism.
FIG. 20 is a side view illustrating a relative position between an operation protrusion and a switch operation body when the seatback is slightly reclined forward.
FIG. 21 is a side view illustrating a state where the seatback is reclined forward.
FIG. 22 is a side view illustrating a relative position between the walk-in mechanism and a tip-up link when adjusting inclination.
FIG. 23 is a side view illustrating a case where a tip-up manipulation is solely performed.
FIG. 24 is an enlarged view illustrating a tip-up link rod.
FIG. 25 is a perspective view illustrating an example of a seat bottom lock mechanism.
FIG. 26 is an exploded view illustrating the reclining mechanism.
FIG. 27 is a side view illustrating the reclining mechanism.
FIG. 28 is a side view illustrating a slide mechanism.

### Best Mode for Carrying Out the Invention

A vehicle seat 1 according to an embodiment of the present invention will be described with reference to the accompanying drawings. The vehicle seat 1 includes a seat bottom 2 that is installed to a vehicle body 7 such that the seat bottom 2 is slidable in the front-rear direction with the use of a slide mechanism 5, and a seatback 3 that is installed to the seat bottom 2 such that the inclination angle of the seatback 3 is adjustable with the use of a reclining mechanism 4.

The vehicle seat 1 further includes a walk-in mechanism 6. The walk-in mechanism 6 is typically provided to a front seat, and is operated to slide the front seat forward with the use of elasticity of a spring. Accordingly, the distance between the front seat and a rear seat is increased to help a rear passenger to ride in the rear seat.

The walk-in mechanism 6 includes a walk-in lever 67. The walk-in lever 67 is manipulated to unlock the reclining mechanism 4 to allow the forward reclining of the seatback 3, and to unlock a slide lock mechanism 5A of the slide mechanism 5 to allow the vehicle seat 1 to move forward.

The vehicle seat 1 includes a tip-up mechanism 8 for bringing the seat bottom 2 in an upright position. The tip-up mechanism 8 unlocks a seat bottom lock mechanism 7 through the forward reclining of the seatback 3, so as to allow the seat bottom 2 to be brought in the upright position.

Support frames 10 are installed to slide rails 9 of the slide mechanism 5, and a seatback frame 11 of the seatback 3 is installed to the support frames 10 such that the seatback frame 11 is rotatable about center shafts 14. The reclining mechanism 4 is disposed between the support frames 10 and the seatback frame 11.

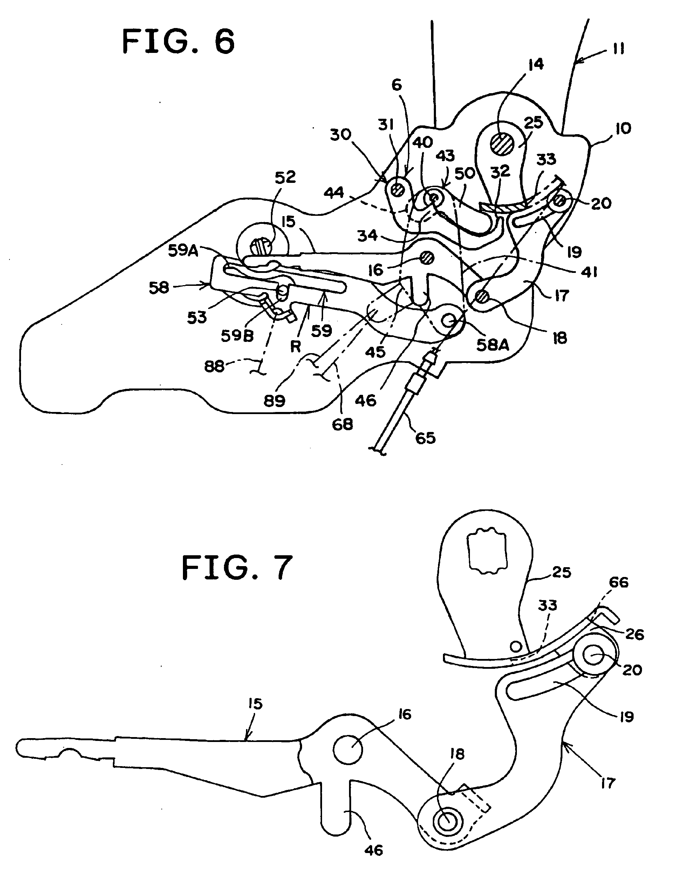

The reclining mechanism 4 according to the present invention may have a general configuration. When a reclining lever 15 is manipulated to unlock the reclining mechanism 4 that will be described later in detail, the seatback frame 11 is rotatable forward or backward about the center shafts 14. The reclining lever 15 is rotatably installed to the support frame 10 through a lever shaft 16, and an end of a link lever 17 is installed to the reclining lever 15 through a shaft 18 (refer to FIG. 7). Another end of the link lever 17 is provided with a slot 19.

A shaft 20 is inserted into the slot 19, and a bent part 26 disposed in a front end of a rotation arm 25 is installed to the shaft 20. The rotation arm 25 is fixed to the center shaft 14, and the rotation arm 25 and the center shaft 14 integrally rotate. When the rotation arm 25 is rotated clockwise in FIG. 6, the reclining mechanism 4 is unlocked.

A memory lever 30 is rotatably installed to the support frame 10 through a shaft 31. When the rotation arm 25 is rotated clockwise, a memory hook 32 formed in a front end of the memory lever 30 is engaged with an unlock engagement surface 33 of the rotation arm 25 to hold the unlocked state of the reclining mechanism 4. The memory lever 30 includes a cam protrusion 34 and cam surfaces 35 and 36.

A switch lever 41 is rotatably installed to the support frame 10 through the lever shaft 16. The lever shaft 16 is fitted into an install hole 42 of the switch lever 41. The switch lever 41 includes a pin-shaped switch operation part 40. The switch operation part 40 removes the memory lever 30 from the rotation arm 25. The switch operation part 40 is slidably engaged with a bent hole 43 of the support frame 10. The bent hole 43 has an L-shape, and includes an engagement hole 44 and a guide hole 50. The guide hole 50 of the bent hole 43 extends in an approximately circular arc about the center shaft 14. The engagement hole 44 extends from a front end of the guide hole 50 in the radial direction of the center shaft 14.

When the switch operation part 40 is in contact with the cam protrusion 34 of the memory lever 30, the memory lever 30 is rotated downward to release the memory hook 32 from the unlock engagement surface 33 of the rotation arm 25 and to return the reclining mechanism 4 from the unlocked state to the locked state. The switch lever 41 has a manipulation restriction surface 45 for moving the switch operation part 40 to the engagement hole 44 of the bent hole 43. The manipulation restriction surface 45 can be in contact with a restriction protrusion 46 provided to the reclining lever 15.

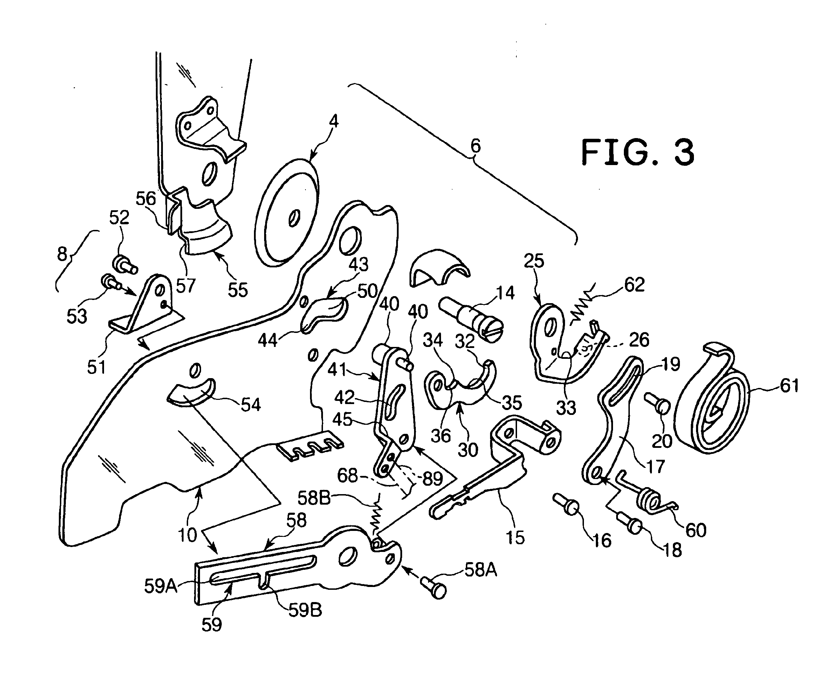

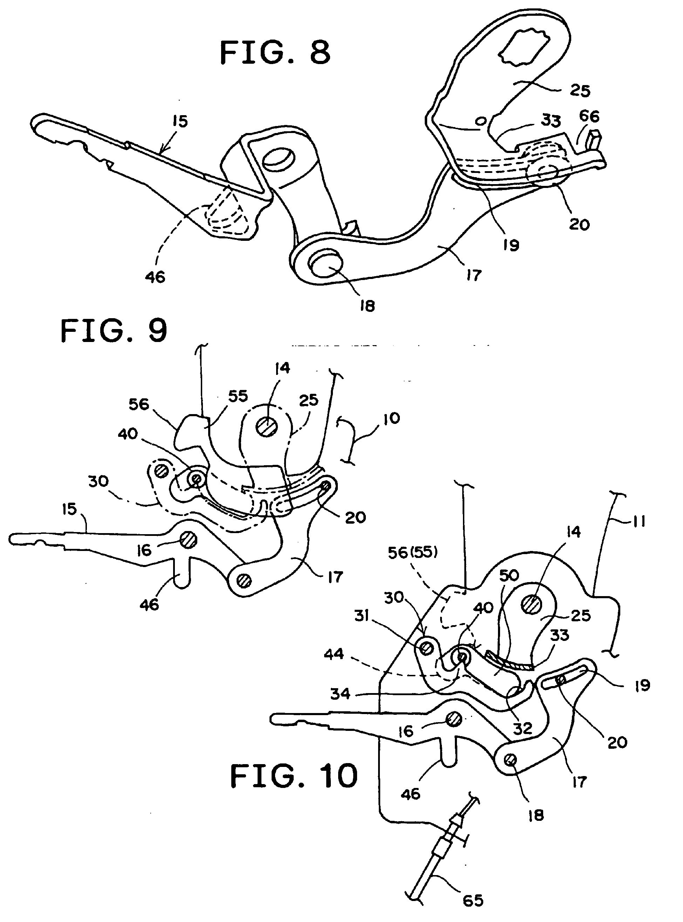

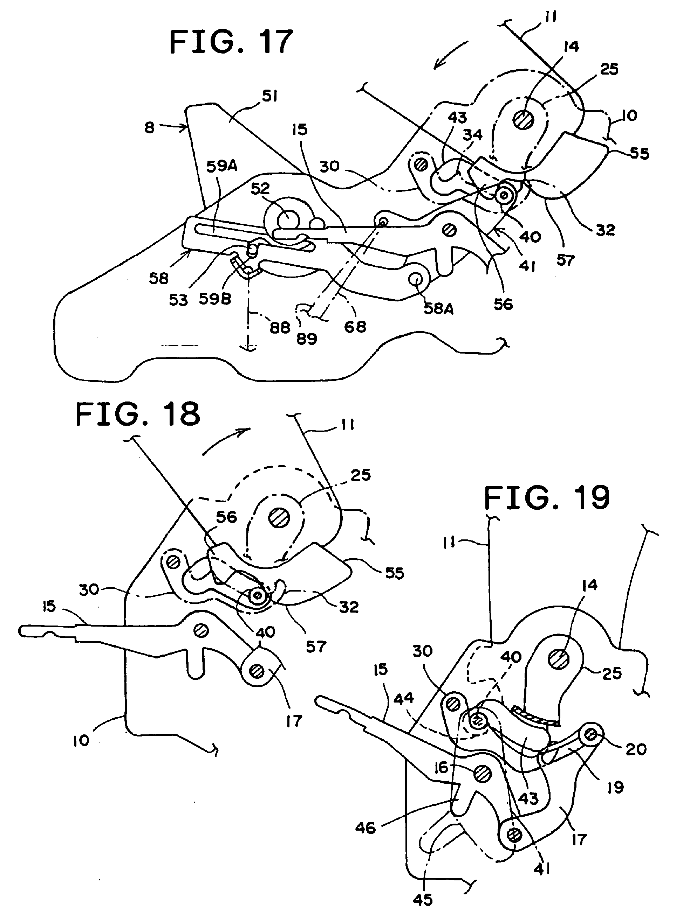

The seatback frame 11 is provided with an attachment 55 moving the switch operation part 40 (refer to FIGS. 3 and 9). When the seatback 3 is reclined forward, a first contact surface 56 of the attachment 55 is in contact with the switch operation part 40 to move the switch operation part 40 into the guide hole 50 of the bent hole 43. The attachment 55 is provided with a second contact surface 57 for returning, and the second contact surface 57 moves the switch operation part 40 in the guide hole 50 to the left side of FIG. 18.

The reference numeral 60 denotes a spring that applies a force to the memory hook 32 of the memory lever 30 to engage with the unlock engagement surface 33 of the rotation arm 25, and the reference numeral 61 denotes a spring that provides a force for reclining the seatback 3 forward, and the reference numeral 65 denotes a cable (refer to FIG. 6). An end of the cable 65 is caught to a catching part 66 of the rotation arm 25. Another end of the cable 65 is connected to the walk-in lever 67 provided to the vehicle seat 1. The switch lever 41 and the slide lock mechanism 5A are connected through a transmit member 68 such as a connecting wire.

When the walk-in lever 67 of the walk-in mechanism 6 is manipulated, the reclining mechanism 4 is unlocked to allow the forward reclining of the seatback 3, and the slide mechanism 5 is unlocked to allow the forward movement of the vehicle seat 1. The walk-in mechanism 6 according to the present embodiment includes the memory lever 30, the switch operation part 40 (the switch lever 41), the bent hole 43 of the support frame 10, and the attachment 55. In addition, in the walk-in mechanism 6 according to the present invention, the memory lever 30, the switch operation part 40, the bent hole 43 of the support frame 10, and the attachment 55 have a memory function that returns the forward reclined seatback 3 to its original predetermined inclination position.

Both lateral sides of the seat bottom 2 are provided with tip-up brackets 51. The tip-up bracket 51 is rotatably installed to the support frame 10 through a tip-up shaft 52. A tip-up spring 52A is installed to the periphery of the tip-up shaft 52, and the elasticity of the tip-up spring 52A applies a force to the seat bottom 2 clockwise. The elasticity of the tip-up spring 52A is approximately equal to a force that supports the weight of the seat bottom 2, which lightens the burden of a force for rotating the seat bottom 2 in the tip-up manner.

At least one of the tip-up brackets 51 includes a restriction shaft 53. The restriction shaft 53 protrudes inward through a through hole 54 formed in the support frame 10, and a protrusion part of the restriction shaft 53 is slidably engaged with a horizontally elongated guide hole 59 of a tip-up plate 58. The guide hole 59, having a T-shape, includes a straight line shaped movement hole 59A extending horizontally, and an engagement hole 59B that extends downward from approximately the middle of the movement hole 59A. The basal portion of the tip-up plate 58 is installed to one end of the switch lever 41 through a shaft 58A.

The walk-in mechanism 6 is operationally connected to the tip-up mechanism 8 through an interlocking mechanism R. When the seatback 3 is reclined forward with the use of the walk-in lever 67, the switch operation part 40 moves within the guide hole 50 to rotate the switch lever 41. When the switch lever 41 is rotated, the tip-up plate 58 moves forward, and the restriction shaft 53 engaging with the engagement hole 59B also moves forward, and thus, the restriction shaft 53 rotates upward the tip-up bracket 51 about the tip-up shaft 52 so as to tip up the seat bottom 2.

It is most desirable that a tip-up lever 69 of the tip-up mechanism 8 is provided to the bottom of the seat bottom 2. When the tip-up lever 69 is manipulated to rotate downward the tip-up plate 58 about the shaft 58A, the engagement hole 59B releases the restriction shaft 53, and the elasticity of the tip-up spring 52A moves the restriction shaft 53 to the left side in the movement hole 59A, so that the seat bottom 2 is popped up by the elasticity of the tip-up spring 52A and/or a manual manipulation.

A spring 58B is disposed between the tip-up plate 58 and the support frame 10, and applies a force upward to the left end of the tip-up plate 58 to prevent the restriction shaft 53 from being unintentionally removed from the engagement hole 59B.

In the case where the tip-up lever 69 is manipulated to remove the restriction shaft 53 from the engagement hole 59B, when the seat bottom 2 is returned to its original seating position, the restriction shaft 53 is engaged again with the engagement hole 59B. That is, when the seat bottom 2 is rotated counterclockwise, the restriction shaft 53 is moved to the right side in the movement hole 59A and engaged again with the engagement hole 59B.

When the walk-in lever 67 is manipulated to tip up the seat bottom 2, the restriction shaft 53 is not removed from the engagement hole 59B. Thus, the restriction shaft 53 functions as a transmit member, together with the tip-up plate 58. The engagement hole 59B also functions as a stopper member that holds the restriction shaft 53 at the seating position, and is configured rationally.

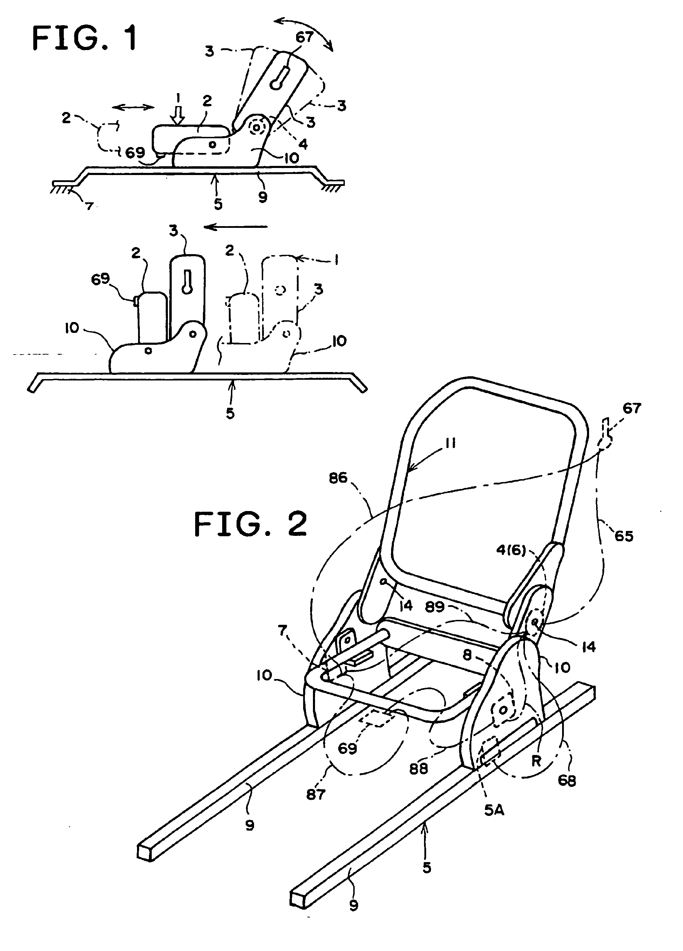

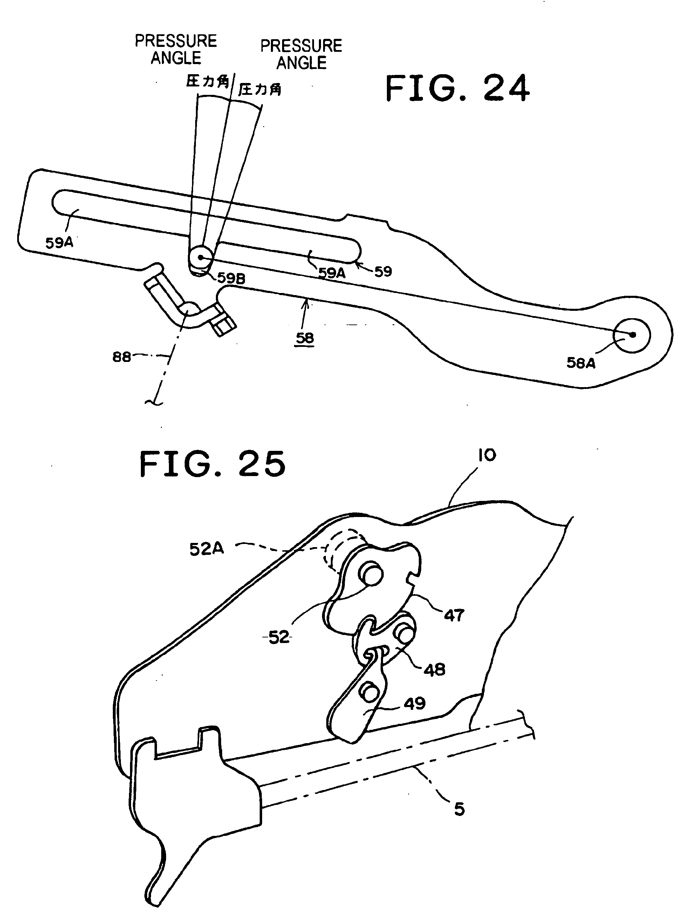

The engagement hole 59B increases in width upward, and is configured to allow the restriction shaft 53 to be removed from the engagement hole 59B when a force is applied in the direction for returning the seat bottom 2 to its original state in a walk-in case. The engagement hole 59B of the guide hole 59 and the restriction shaft 53 function as a stopper that holds the seat bottom 2 at the seating position, and the seat bottom lock mechanism 7, which holds the seat bottom 2 at the seating position, is further provided, thereby providing a double lock configuration. The configuration of the seat bottom lock mechanism 7 is arbitrary, but referring to FIG. 25, the reference numeral 47 denotes a latch, the reference numeral 48 denotes a ratchet, and the reference numeral 49 denotes an operation body. When the seat bottom lock mechanism 7 is provided to one of the left and right support frames 10, and the tip-up mechanism 8 is provided to the other of the left and right support frames 10, the surrounding space of the support frames 10 can be effectively used as an install space (FIG. 2).

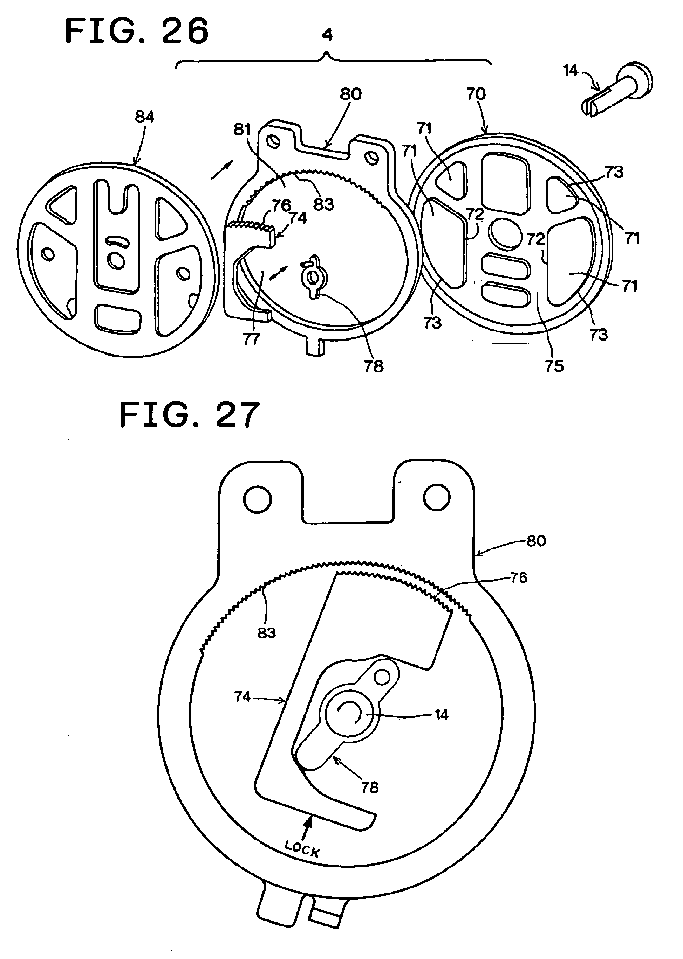

Referring to FIGS. 26 and 27, an example of the reclining mechanism 4 includes a fitting and supporting guide member 70, which forms bulge parts 71 that bulge laterally. The bulge parts 71 include guide straight line parts 72 and supporting arc parts 73, and form a lock sliding recess 75 between the guide straight line part 72 and the guide straight line part 72. A sliding lock member 74 slides at the lock sliding recess 75.

The sliding lock member 74 forms a lock gear part 76 on one side in a sliding direction, and forms a cam hole 77 in the middle part of the sliding lock member 74, where the cam hole 77 has an approximately circle shape, and one of a front portion and a rear portion of the cam hole 77 is open. A cam body 78 is fitted in the cam hole 77, and the cam body 78 is fixed to the center shaft 14.

A perfect circle shaped fitting hole 81 of a ring member 80 is fitted on the peripheries of the supporting arc parts 73 respectively of the bulge parts 71, and an arc gear 83 is formed in the inner surface of the fitting hole 81, where the lock gear part 76 of the sliding lock member 74 is engaged with and removed from the arc gear 83.

The fitting and supporting guide member 70 and the ring member 80 can constitute the reclining mechanism 4 for a seat, but in the present embodiment, an opposite fitting and supporting guide member 84 is provided to the outside of the ring member 80, and the fitting and supporting guide member 70 and the opposite fitting and supporting guide member 84 hold and support the ring member 80 to be completed as a reclining mechanism and thus facilitating install and assembly.

When the reclining lever 15 is rotated about the center shaft 14, the reclining lever 15 rotates the cam body 78, and the cam body 78 comes in contact with the cam hole 77 of the sliding lock member 74, and the sliding lock member 74 slides in the lock sliding recess 75 between the bulge parts 71 in a direction away from the arc gear 83, so as to unlock the reclining mechanism 4 and to adjust the inclination angle of the seatback 3. When the reclining lever 15 is released, a spring (not shown) rotates the cam body 78 in the lock direction, and the sliding lock member 74 slides in the lock sliding recess 75, and the lock gear part 76 of the sliding lock member 74 is engaged with the arc gear 83, so as to lock the reclining mechanism 4.

When the sliding lock member 74 moves in the lock sliding recess 75 to unlock the reclining mechanism 4 and thus allowing the rotation of the seatback 3, the seatback 3 is, by the spring 61, rotated backward and returned to a predetermined inclination position before the walk-in case.

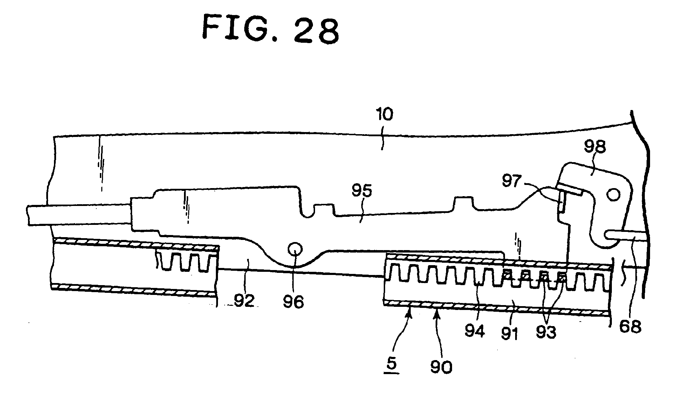

The configuration of the slide lock mechanism 5A of the slide mechanism 5 is arbitrary, but referring to FIG. 28, the slide rail 9 of the slide mechanism 5 is configured by installing an upper rail 92 to a lower rail 91 that is fixed to the vehicle body such that the upper rail 92 is slidable back and forth, and by providing a plurality of lock parts 93 in parallel in the back and forth direction to the upper rail 92 such that lock parts 93 are engaged with and removed from a plurality of engagement parts 94 of the lower rail 91.

The lock parts 93 are formed in the rear part of a rotation arm 95 in the back and forth direction, and the middle part of the rotation arm 95 is rotatably installed to the upper rail 92 through a shaft 96, and a manipulation lever (not shown) for sliding is provided to the front side of the rotation arm 95.

An engagement surface 97 disposed in the rear end of the rotation arm 95 is in contact with an end of an unlock switch member 98. The unlock switch member 98 rotates while being interlocked with the walk-in mechanism 6. When the unlock switch member 98 is spaced apart from the rear upper surface of the rotation arm 95, the lock parts 93 are rotated upward about the shaft 96 and engaged with the engagement parts 94 so as to lock the slide mechanism 5. When the unlock switch member 98 presses the rear upper surface of the rotation arm 95, the lock parts 93 are rotated downward about the shaft 96 and removed from the engagement parts 94 so as to unlock the slide mechanism 5 and thus achieving the walk-in state.

When the seatback 3 is slid rearward from the forward reclining state to the seating state at a desired position, the slide mechanism 5 returns to the slide lock state. The reference numeral 86 denotes a transmit member that connects the walk-in lever 67 and the seat bottom lock mechanism 7 to each other, and the reference numeral 87 denotes a transmit member that connects the tip-up lever 69 and the seat bottom lock mechanism 7 to each other, and the reference numeral 88 denotes a transmit member that connects the tip-up lever 69 and the tip-up mechanism 8 to each other.

When the walk-in lever 67 provided at a desired position of the seatback 3 is manipulated, the reclining mechanism 4 is unlocked first, then the seatback 3 is reclined forward, then the forward reclining of the seatback 3 unlocks the slide mechanism 5 to move the whole of the seat forward, so as to form a riding space in which a passenger can ride between the forward moved seat and the vehicle seat 1 that is disposed behind the forward moved seat and thus achieving the walk-in state (in addition, the tip-up mechanism 8 is interlocked with the walk-in mechanism 6, and the interlocking of the walk-in mechanism 6 with the tip-up mechanism 8 will be described later, for convenience in understanding).

When the walk-in lever 67 is manipulated, the cable 65 is attracted, and the cable 65 rotates the rotation arm 25 to the left side of FIG. 6, and the rotation arm 25 rotates the center shaft 14 clockwise, so as to unlock the reclining mechanism 4 (refer to FIG. 10).

In this case, since the reclining lever 15 is not manipulated, the shaft 20 is moved in the slot 19 of the link lever 17 by the rotation of the rotation arm 25, and the link lever 17 is not moved, and the reclining lever 15 is also not moved (refer to FIG. 10). Thus, since the restriction protrusion 46 of the reclining lever 15 is not in contact with the manipulation restriction surface 45 of the switch lever 41, the switch operation part 40 is disposed in the guide hole 50 of the bent hole 43.

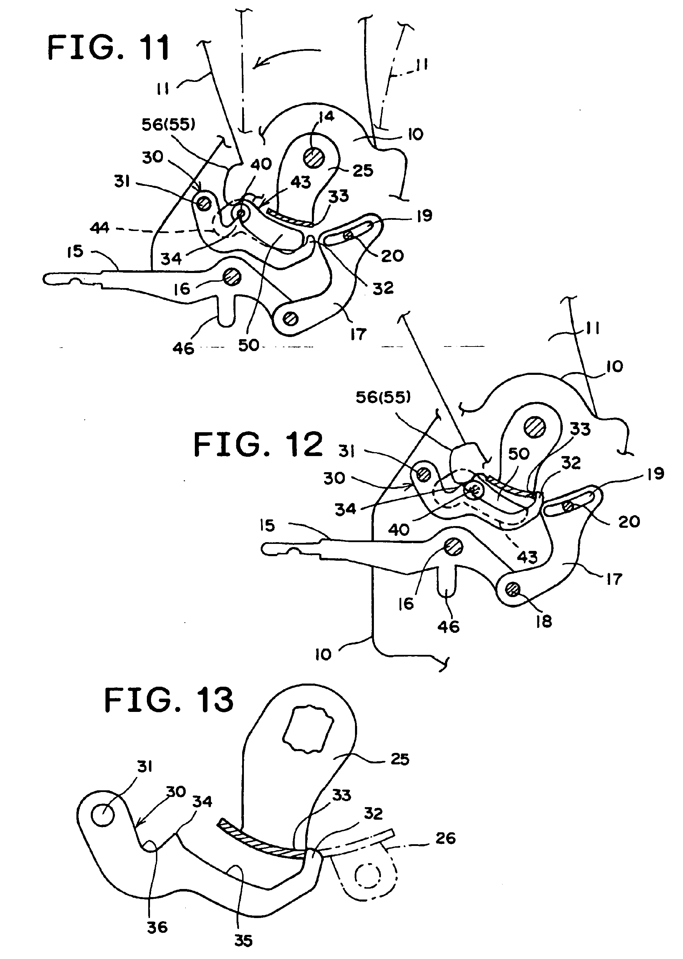

When the seatback 3 is reclined forward from the seating position by the left rotation of the rotation arm 25 (refer to FIG. 11), the first contact surface 56 of the attachment 55 of the seatback 3 is brought into contact with the switch operation part 40, and the first contact surface 56, through the forward reclining of the seatback 3, moves the switch operation part 40 to the right side of FIG. 11 in the guide hole 50 of the bent hole 43 of the support frame 10. When the switch operation part 40 moves to the right side and passes by the cam protrusion 34 of the memory lever 30 (refer to FIG. 11), the memory lever 30 is rotated upward by the elasticity of the spring 60, and the memory hook 32 of the memory lever 30 is engaged with the unlock engagement surface 33 of the rotation arm 25.

When the memory hook 32 of the memory lever 30 is engaged with the unlock engagement surface 33 of the rotation arm 25, the rotation arm 25 is maintained at the position of the unlocked state, and the seatback 3 is further reclined forward. When the seatback 3 is reclined forward to arrive at the walk-in position, the switch lever 41 is rotated to attract the transmit member 68 and unlocks the slide mechanism 5 to move forward the whole of the seat to be in the walk-in state.

For returning from the walk-in state, the seatback 3 is reclined forward as illustrated in FIG. 17, and the switch operation part 40 is disposed on the right side of the guide hole 50 of the bent hole 43, and the memory hook 32 of the memory lever 30 is engaged with the unlock engagement surface 33 of the rotation arm 25. Since the slide mechanism 5 is in the unlocked state, the whole of the vehicle seat 1 is moved rearward from the walk-in state. In this case, in the case where the elasticity of the spring 61 reclining forward the seatback 3 is stronger than the resistance of the slide lock mechanism 5A when moving the vehicle seat 1 rearward, even when the forward reclined seatback 3 is pushed rearward, the seatback 3 does not stand, so that the whole of the vehicle seat 1 can be moved rearward, which is adapted for preventing erroneous manipulation and for improving manipulation.

When the seatback 3 is raised up, the second contact surface 57 of the attachment 55 moves the switch operation part 40 to the left side in the guide hole 50 from the state of FIG. 17 (refer to FIG 18). When the switch operation part 40 is moved to the left side, and passes by the cam protrusion 34 of the memory lever 30, the memory hook 32 of the memory lever 30 is rotated downward against the elasticity of the spring 60, and the memory hook 32 of the memory lever 30 is removed from the unlock engagement surface 33 of the rotation arm 25, and the rotation arm 25 is rotated to the locked state by the elasticity of a spring 62.

When the switch operation part 40 is moved to the left side, and passes by the cam protrusion 34 of the memory lever 30, the seatback 3 is moved to its original predetermined inclination angle. In this case, since the rotation arm 25 is rotated to the right side to lock the reclining mechanism 4, the seatback 3 is returned to and maintained at its original predetermined inclination angle. When the switch operation part 40 is moved to the left side, and passes by the cam protrusion 34 of the memory lever 30, the switch lever 41 loosens the transmit member 68 to lock the slide mechanism 5.

When the seatback 3 disposed at the walk-in state by the walk-in mechanism 6 is returned by using the reclining mechanism 4 without a memory mechanism, the seatback 3 can be returned to its original inclination angle, install is facilitated with the use of the economical reclining mechanism 4 and thus achieving a rational configuration.

The operation of the walk-in mechanism 6 in the case where the inclination angle of the seatback 3 is adjusted by the reclining mechanism 4 will now be described. When the reclining lever 15 is manipulated, the reclining lever 15 attracts the link lever 17, and the inner surface of the slot 19 of the link lever 17 is brought into contact with the shaft 20 to attract the shaft 20, and the shaft 20 rotates the rotation arm 25 to the left side of FIG. 19, so that the rotation arm 25 rotates the center shaft 14 clockwise to unlock the reclining mechanism 4.

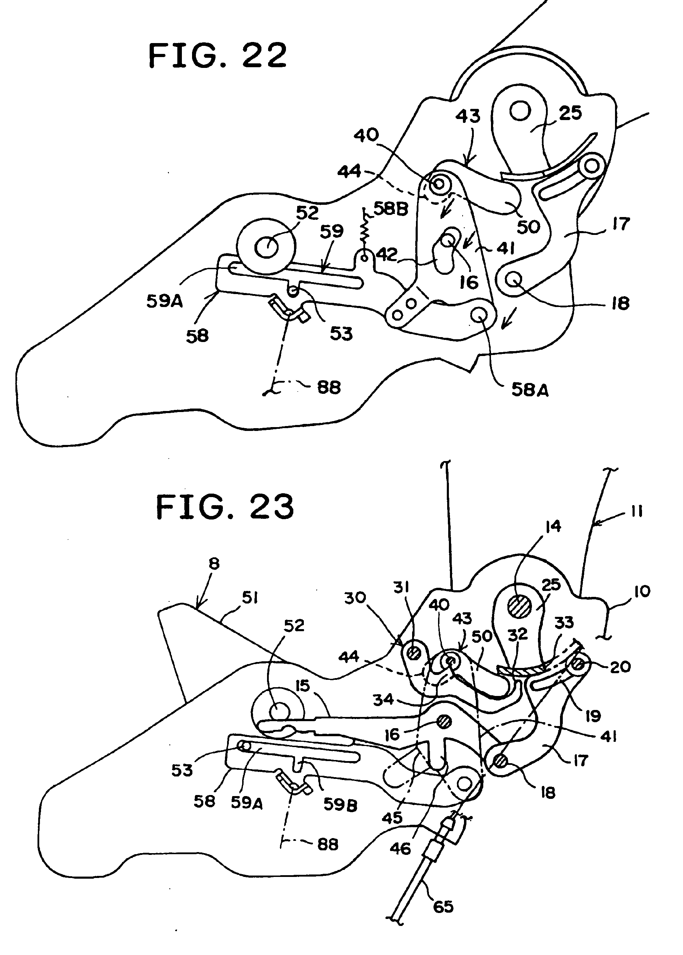

When the reclining lever 15 is manipulated, the restriction protrusion 46 of the reclining lever 15 is brought into contact with the manipulation restriction surface 45 of the switch lever 41, and the whole of the switch lever 41 is moved in an arrow direction with respect to the lever shaft 16 through the insert hole 42 as illustrated in FIG. 22, and thus, the switch operation part 40 is fitted into the engagement hole 44 of the bent hole 43 of the support frame 10.

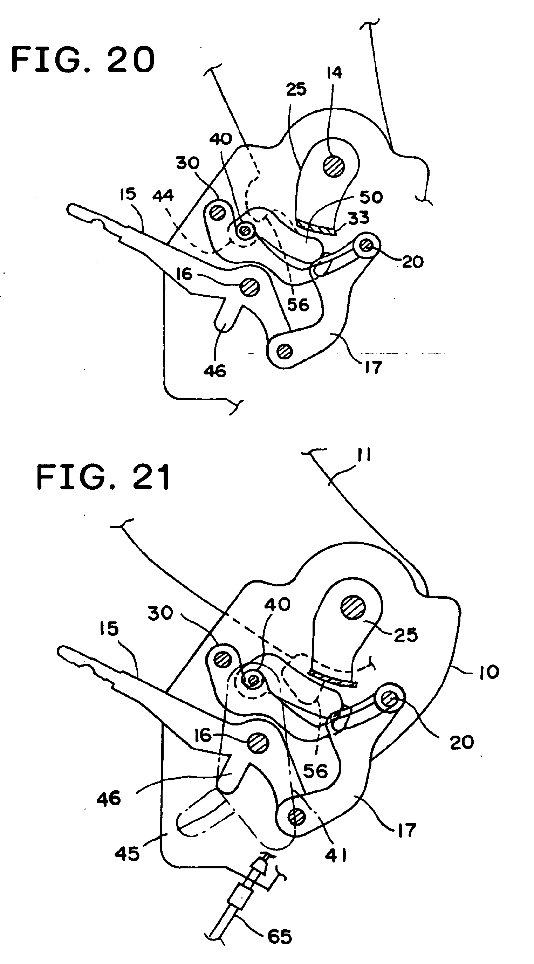

Since the switch operation part 40 is moved back from the movement track of the first contact surface 56 due to the forward reclining of the seatback 3 (refer to FIG. 20), the switch operation part 40 always moves the memory lever 30 downward while adjusting the reclining of the seatback 3, so as to prevent the memory hook 32 of the memory lever 30 from being in contact with the unlock engagement surface 33 of the rotation arm 25.

In the case where the reclining mechanism 4 is at the unlocked state, when the seatback 3 is adjusted to a desired inclination angle, and the reclining lever 15 is released, the rotation arm 25 is moved to the right side of FIG. 20 by the elasticity of the spring 62, and the right rotation of the rotation arm 25 rotates the center shaft 14 so as to lock the reclining mechanism 4 and to maintain the seatback 3 at the desired inclination angle.

As described above, in the case where the reclining lever 15 is manipulated, the reclining mechanism 4 is singly manipulated and the walk-in mechanism 6 is not operated, and thus, even when the seatback 3 is reclined forward, the switch lever 41 is not rotated, so that the slide mechanism 5 is not unlocked and not moved to the walk-in state and thus preventing erroneous manipulation.

When the walk-in lever 67 is manipulated, the cable 65 is attracted to rotate the rotation arm 25 to the left side of FIG. 6, so that the reclining mechanism 4 is brought in the unlock state by the walk-in manipulation, not a normal inclination adjustment. Thus, as described above, since the restriction protrusion 46 of the reclining lever 15 is not in contact with the manipulation restriction surface 45 of the switch lever 41, the switch operation part 40 is disposed in the guide hole 50 of the bent hole 43.

Since the reclining mechanism 4 is in the unlocked state, when the seatback 3 is reclined forward from the seating position, the first contact surface 56 of the attachment 55 of the seatback 3 moves the switch operation part 40 to the right side of FIG. 10 in the guide hole 50 of the bent hole 43 of the support frame 10. The memory hook 32 of the memory lever 30 is engaged with the unlock engagement surface 33 of the rotation arm 25 by the right movement of the switch operation part 40. Since the right movement of the switch operation part 40 is performed by the rotation of the switch lever 41 about the lever shaft 16, and the rear part of the tip-up plate 58 is installed to the switch lever 41 through the shaft 58A, the switch lever 41 moves the tip-up plate 58 forward.

Since the engagement hole 59B of the guide hole 59 of the tip-up plate 58 is engaged with the restriction shaft 53 fixed to the tip-up bracket 51, the restriction shaft 53 is pushed by the engagement hole 59B of the tip-up plate 58 to rotate the tip-up bracket 51 upward, thus tipping up the seat bottom 2. When the seat bottom 2 is tipped up to further recline the seatback 3 forward to the walk-in position, the switch lever 41 of the walk-in mechanism 6 is rotated, and thus, the transmit member 68 transmits the rotation of the switch lever 41 to release the slide lock mechanism 5A of the slide mechanism 5 and to move the whole of the seat forward and thus achieving the walk-in state.

In the case of returning, the whole of the vehicle seat 1 is moved back to its original predetermined position in the state where the seatback 3 is reclined forward in the walk-in state. This achieves the states of FIGS. 17 and 18 as described above, in which the switch operation part 40 is disposed on the right side of the guide hole 50 of the bent hole 43, and the switch operation part 40 is in contact with the second contact surface 57 of the attachment 55, and the memory hook 32 of the memory lever 30 is engaged with the unlock engagement surface 33 of the rotation arm 25.

Then, the seatback 3 is raised up, and the second contact surface 57 of the attachment 55 moves the switch operation part 40 to the left side in the guide hole 50 from the state of FIG. 17 (refer to FIG. 18), so that the memory hook 32 of the memory lever 30 is removed from the unlock engagement surface 33 of the rotation arm 25 (refer to FIG. 9), but the left movement of the switch operation part 40 in the guide hole 50 moves the shaft 58A of the switch lever 41 rearward from the state of FIG. 17 to the state of FIG. 6, so as to attract the tip-up plate 58 rearward.

When the tip-up plate 58 is moved rearward, the restriction shaft 53 engaged with the engagement hole 59B of the tip-up plate 58 is moved rearward to rotate the tip-up bracket 51 downward and to return the seat bottom 2 in the tip-up state to its original seating state. Thus, since the tip-up plate 58 is interlocked with the switch operation part 40 and the switch lever 41 that are operated at the walk-in mechanism 6, the tip-up mechanism 8 is simply interlocked with the walk-in mechanism 6, so as to return the seat bottom 2 and to simplify the walk-in manipulation.

Since the tip-up spring 52A always applies a force to the seat bottom 2 such that the seat bottom 2 stands up, the restriction shaft 53 always receives a force such that the restriction shaft 53 is moved forward in the movement hole 59A. Meanwhile, since the spring 58B always applies a force to the tip-up plate 58 such that the tip-up plate 58 is rotated upward about the shaft 58A, when the tip-up lever 69 is solely manipulated, the tip-up plate 58 is rotated downward about the shaft 58A, and the restriction shaft 53 is removed from the engagement hole 59B, so that the elasticity of the tip-up spring 52A moves the restriction shaft 53 along the movement hole 59A to the left side of FIG. 23, and the seat bottom 2 is popped up by the elasticity of the tip-up spring 52A and/or a manual manipulation.

Since the spring 58B always applies a force to the tip-up plate 58 such that the tip-up plate 58 is rotated upward about the shaft 58A, the restriction shaft 53 removed from the engagement hole 59B always slides along the lower inner surface of the movement hole 59A, and when the restriction shaft 53 arrives at the engagement hole 59B, the tip-up plate 58 is rotated upward so that the engagement hole 59B is engaged with the restriction shaft 53.

Thus, to engage the engagement hole 59B with the restriction shaft 53, the spring 58B always applies a force to the tip-up plate 58 so that the tip-up plate 58 is rotated upward, and the tip-up spring 52A applies a force to the restriction shaft 53 in a direction that crosses the engagement hole 59B. Thus, the restriction shaft 53 is not removed from the engagement hole 59B when the operation of the walk-in mechanism 6 is interlocked, and the restriction shaft 53 together with the tip-up plate 58 functions as an interlocking transmit member, and the engagement hole 59B also functions as a stopper member that holds the restriction shaft 53 at the seating position, thus achieving a rational configuration.

Although the engagement hole 59B increases in width upward, the restriction shaft 53 is not removed from the engagement hole 59B when the operation of the walk-in mechanism 6 is interlocked. During the walk-in operation, when a force is applied in the direction that returns the seat bottom 2 to its original state, the restriction shaft 53 is configured to be removed from the engagement hole 59B, and thus when a force is applied in the direction that returns the seat bottom 2 to its original state, the restriction shaft 53 is removed from the engagement hole 59B, thus preventing breakage thereof.

## Claims

1. A vehicle seat (1) comprising:
a seat bottom (2) movable back and forth through a slide mechanism (5);
a seatback (3) whose inclination angle is adjustable about a center shaft through a reclining mechanism (4);
a seat bottom lock mechanism (7) for holding the seat bottom (2) at the normal position;
a walk-in mechanism (6) for setting the reclining mechanism (4) to an unlocked state and setting the slide mechanism (5) to an unlocked state; and
a walk-in lever (67) for operating the walk-in mechanism (6), **characterized by**:
a tip-up mechanism (8) for moving the seat bottom (2) between a normal position and an upright position;
an interlocking mechanism (R) operationally connecting the tip-up mechanism (8) with the walk-in mechanism (6); and further **characterized in that** the tip-up mechanism (8) enables the seat bottom (2) to be automatically popped into the upright position when the seat bottom lock mechanism (7) is released from the normal position.

2. The vehicle seat according to claim 1, wherein the walk-in lever (67) is manipulated to switch the reclining mechanism (4) to the unlocked state, and the seatback (3) is rotated forward to switch the slide mechanism (5) to the unlocked state.

3. The vehicle seat (1) according to claim 1, wherein a portion of the walk-in mechanism (6) is connected to a portion of the tip-up mechanism (8) through the interlocking mechanism (R) such that, when the vehicle seat (1) disposed at a walk-in state is moved rearward to an original position of the vehicle seat (1) to raise up the seatback (3), the seat bottom (2) that is interlocked with the seatback (3) and is popped up by the raising of the seatback (3) is returned to an original
seating position.

4. The vehicle seat (1) according to claim 1,
wherein the tip-up mechanism (8) includes a shaft (52) installing the seat bottom (2) rotatably to the slide mechanism (5), a tip-up spring (52a) that always applies a force to the seat bottom (2) to be at an upright state, and the seat bottom lock mechanism (7) holding the seat bottom (2) at each of a seating position and the upright position,
a switch lever (41), which is provided with a switch operation part (40) that is moved when manipulating the walk-in lever (67), is rotatably installed to a portion of the walk-in mechanism (6), and
the switch lever (41) is connected through the interlocking mechanism (R) to a restriction shaft (53) that is provided to a tip-up bracket (51).

5. The vehicle seat according to claim 4,
wherein the interlocking mechanism (R) includes a tip-up plate (58) provided with a guide hole (59) having an engagement hole (59b) with which the restriction shaft (53) is engaged so that the engagement (59b) hole is interlocked with the walk-in mechanism (6), and a moving hole (59a) in which the restriction shaft (53) is moved when solely manipulating a tip-up operation, and
the restriction shaft (53) is positioned in the guide hole (59) in an end of the tip-up plate (58), and another end of the tip-up plate (58) is connected to the switch lever (41).

6. The vehicle seat according to claim 5,
wherein the tip-up plate (58) is provided with a spring that provides a force such that the restriction shaft (53) is engaged with the engagement hole (59b), so that in a walk-in case, when the restriction shaft (53) is engaged with the engagement hole (59b) and the walk-in lever (67) is manipulated to recline the seatback (3) forward, the tip-up plate (58) is interlocked with the switch lever (41) to pop up the seat bottom (2) to be at a walk-in state,
when the vehicle seat (1) disposed at the walk-in state is moved rearward to an original position of the vehicle seat (1) to raise up the seatback (3), the tip-up plate (58) is interlocked with the seatback (3) to return the popped up seat bottom (2) to the original seating position, and
when a tip-up manipulation is solely performed, the restriction shaft (53) is movable in the movement hole (59a), so that the restriction shaft (53) is disconnected from the switch lever (41).

7. The vehicle seat according to claim 6,
wherein the guide hole (59) of the tip-up plate (58) is provided with the engagement hole (59b) that extends downward from an approximately longitudinal middle of the movement hole (59a) that has a straight line shape, so that the guide hole (59) forms a T-shape,
the engagement hole (59b) increases in width upward, and
in the walk-in case, when a predetermined force or greater force is applied in a direction in which the seat bottom (2) is returned to an original state of the seat bottom (2), the restriction shaft (53) is removed from the engagement hole (59b).

8. The vehicle seat according to claim 7,
wherein the center shaft (14) is provided with a rotation arm (25) that is rotated by manipulating a reclining lever (15) or the walk-in lever (61) so as to unlock the reclining mechanism (4),
the reclining lever (15) rotates the rotation arm (25) through a link lever (17) having a slot (19),
a manipulation member for the walk-in case is configured to manipulate the rotation arm (25) independently from the reclining lever (15),
the switch operation part (40) is provided to an end of the switch lever (41) that is rotatably provided to a support frame (10),
the support frame (10) is provided with a bent hole (43) that includes a guide hole (50) along which the switch operation part (40) is moved when the switch operation part (40) is in the walk-in case, and an engagement hole (44) with which the switch operation part (40) is engaged when adjusting inclination, and
another end of the switch lever (41) is provided with a manipulation restriction surface (45) that moves the switch operation part (40) such that the switch operation part (40) is engaged with the engagement hole (44) of the bent hole (43) by a restriction protrusion (46) of the reclining lever (15).

9. The vehicle seat according to claim 8,
wherein the seatback (3) is provided with an attachment that has a first contact surface (56) that moves the switch operation part (40) when the seatback (3) is reclined forward, and a second contact surface (57) that moves the switch operation part (40) when the seatback (3) is raised up,
the support frame (10) is provided with a memory lever (30) including a memory hook (32) that is engaged with an unlock engagement surface (33) of the rotation arm (25) to hold the unlocked state of the reclining mechanism (4) through the rotation arm (25),
the memory hook (32) is configured to be movable in and out of a movement track of the unlock engagement surface (33); the memory hook (32) is engaged with the unlock engagement surface (33) when the walk-in lever (67) is manipulated;
the memory hook (32) is spaced apart from the unlock engagement surface (33) of the rotation arm (25) when the reclining lever (15) is manipulated,
a predetermined position of the memory lever (30) is provided with a cam protrusion (34), and
when the cam protrusion (34) is brought into contact with the switch operation part (40), the memory hook (32) leaves the movement track of the unlock engagement surface (33), so that the memory hook (32) moves in and out of the movement track of the unlock engagement surface (33).

## Patentansprüche

1. Fahrzeugsitz (1), enthaltend:
eine Sitzfläche (2), die durch einen Schiebemechanismus (5) zurück- und vorgeschoben werden kann;
eine Sitzlehne (3), deren Neigungswinkel um eine zentrale Welle durch einen Kippmechanismus (4) einstellbar ist;
einen Sitzflächenarretiermechanismus (7) zum Halten der Sitzfläche (2) in der Normalstellung;
einen Einstiegsmechanismus (6) zum Einstellen des Kippmechanismus (4) in einen entriegelten Zustand und Einstellen des Schiebemechanismus (5) in einen entriegelten Zustand; und
einen Einstiegshebel (67) zum Betätigen des Einstiegsmechanismus' (6), **gekennzeichnet durch**:
einen Aufkippmechanismus (8) zum Bewegen der Sitzfläche (2) zwischen einer normalen Stellung und einer aufrechten Stellung; und
einen Verriegelungsmechanismus (R), der in Funktion den Aufkippmechanismus (8) mit dem Einstiegsmechanismus (6) verbindet; und weiterhin **dadurch gekennzeichnet, dass** es der Aufkippmechanismus (8) ermöglicht, dass die Sitzfläche (2) automatisch in die aufrechte Stellung klappt, wenn der Sitzflächenarretiermechanismus (7) aus der normalen Stellung gelöst ist.

2. Fahrzeugsitz nach Anspruch 1, bei dem der Einstiegshebel (67) betätigt wird, um den Kippemechanismus (4) in den entriegelten Zustand umzuschalten, und die Sitzlehne (3) nach vorne gedreht wird, um den Schiebemechanismus (5) in den entriegelten Zustand umzuschalten.

3. Fahrzeugsitz (1) nach Anspruch 1, bei dem ein Abschnitt des Einstiegsmechanismus' (6) mit einem Abschnitt des Aufkippmechanismus' durch den Verriegelungsmechanismus (R) derart verbunden ist, dass, wenn der Fahrzeugsitz (1), der in einem Einstiegszustand angeordnet ist, nach hinten in eine Ausgangsstellung des Fahrzeugsitzes (1) bewegt wird, um die Sitzlehne (3) aufzurichten, die Sitzfläche (2), die mit der Sitzlehne (3) verriegelt ist und durch das Anheben der Sitzlehne (3) aufgeklappt wird, in eine ursprüngliche Sitzstellung rückgestellt wird.

4. Fahrzeugsitz (1) nach Anspruch 1,
bei dem der Aufkippmechanismus (8) enthält: eine Welle (52), die die Sitzfläche (2) drehbar an dem Schiebemechanismus (5) anbringt, eine Aufkippfeder (52a), die fortwährend 0 eine Kraft auf die Sitzfläche (2) ausübt, damit sich diese in einer aufrechten Stellung befindet, und den Sitzflächenarretiermechanismus (7), der die Sitzfläche (2) jeweils in einer Sitzstellung und einer aufrechten Stellung hält,
wobei ein Schalthebel (41), der mit einem Schaltbetätigungsteil (40) versehen ist, der bewegt wird, wenn der Einstiegshebel (67) betätigt wird, drehbar an einem Abschnitt des Einstiegsmechanismus' (6) angebracht ist und
der Schalthebel (41) durch den Verriegelungsmechanismus (R) mit einer Begrenzungswelle (53) verbunden ist, die an einer Aufkippkonsole (51) vorgesehen ist.

5. Fahrzeugsitz nach Anspruch 4,
bei dem der Verriegelungsmechanismus (R) eine Aufkippplatte (58) enthält, die mit einem Führungsloch (59) versehen ist, das ein Eingreifloch (59b), mit dem die Beschränkungswelle (53) derart in Eingriff steht, dass das Eingreifloch (59b) mit dem Einstiegsmechanismus (6) verriegelt ist, und ein Bewegungsloch (59a) hat, in dem die Beschränkungswelle (53) bewegt wird, wenn lediglich eine Aufkipptätigkeit ausgeführt wird, und
die Beschränkungswelle (53) in dem Führungsloch (59) an einem Ende der Aufkippplatte (58) angeordnet ist und ein weiteres Ende der Aufkippplatte (58) mit dem Umschalthebel (41) verbunden ist.

6. Fahrzeugsitz nach Anspruch 5,
bei dem die Aufkippplatte (58) mit einer Feder versehen ist, die eine Kraft derart bereitstellt, dass die Beschränkungswelle (53) mit dem Eingreifloch (59b) in Eingriff steht, so dass im Falle eines Einstiegs, wenn die Beschränkungswelle (53) mit dem Eingreifloch (59b) in Eingriff steht und der Einstiegshebel (67) betätigt wird, um die Sitzlehne (3) nach vorne zu neigen, die Aufkippplatte (58) mit dem Schalthebel (41) verriegelt ist, um die Sitzfläche (2) aufzuklappen, damit sie sich in dem Einstiegszustand befindet,
wenn der Fahrzeugsitz (1) in dem Einstiegszustand rückwärts in eine Ausgangsstellung des Fahrzeugsitzes (1) bewegt wird, um die Sitzlehne (3) aufzurichten, die Aufkippplatte (58) mit der Sitzlehne (3) verriegelt wird, um die aufgeklappte Sitzfläche (2) in die ursprüngliche Sitzstellung rückzustellen, und
wenn eine Aufkipptätigkeit alleine ausgeführt wird, die Beschränkungswelle (53) in dem Bewegungsloch (59a) beweglich ist, so dass die Begrenzungswelle (53) von dem Schalthebel (41) gelöst wird.

7. Fahrzeugsitz nach Anspruch 6,
bei dem das Führungsloch (59) der Aufkippplatte (58) mit dem Eingreifloch (59b) versehen ist, das sich nach unten von einer etwa längs verlaufenden Mitte des Bewegungsloches (59a) erstreckt, das die Form einer geraden Linie hat, so dass das Führungsloch (59) eine T-Form bildet,
das Eingreifloch (59b) in der Breite nach oben zunimmt und
im Einstiegsfall, wenn eine vorbestimmte Kraft oder eine größere Kraft in einer Richtung wirkt, in der die Sitzfläche (2) in einen Ursprungszustand der Sitzfläche (2) rückgestellt wird, die Beschränkungswelle (53) aus dem Eingreifloch (59b) entfernt wird.

8. Fahrzeugsitz nach Anspruch 7,
bei dem die zentrale Welle (14) mit einem Dreharm (25) verbunden ist, der durch Betätigung eines Kipphebels (15) oder des Einstiegshebels (61) gedreht wird, um so den Kippmechanismus (4) zu entriegeln,
der Kipphebel (15) den Dreharm (25) durch einen Verbindungshebel (17) dreht, der einen Schlitz (19) hat,
ein Betätigungselement für den Einstiegsfall dazu eingerichtet ist, den Dreharm (25) unabhängig von dem Kipphebel (15) zu betätigen,
der Schaltbetätigungsteil (40) an einem Ende des Schalthebels (41) vorgesehen ist, der an einem Halterahmen (10) drehbar vorgesehen ist,
der Halterahmen (10) mit einem bogenförmigen Loch (43) versehen ist, das ein Führungsloch (50), entlang dessen der Schaltbetätigungsteil (40) bewegt wird, wenn sich der Schaltbetätigungsteil (40) in dem Einstiegszustand befindet, und ein Eingreifloch (44) enthält, mit dem der Schaltbetätigungsteil (40) in Eingriff steht, wenn die Neigung eingestellt wird, und
ein weiteres Ende des Schalthebels (41) mit einer Betätigungsbeschränkungsoberfläche (45) versehen ist, die den Schaltbetätigungsteil (40) derart bewegt, dass der Schaltbetätigungsteil (40) mit dem Eingreifloch (44) des bogenförmigen Loches (43) durch einen Beschränkungsvorsprung (46) des Kipphebels (15) in Eingriff gebracht wird.

9. Fahrzeugsitz nach Anspruch 8,
bei dem die Sitzlehne (3) mit einem Anbau versehen ist, der eine erste Kontaktfläche (56), die den Schaltbetätigungsteil (40) bewegt, wenn die Sitzlehne (3) nach vorne geneigt wird, und eine zweite Kontaktfläche (57) hat, die den Schaltbetätigungsteil (40) bewegt, wenn die Sitzlehne (3) aufgerichtet wird,
der Halterahmen (10) mit einem Rückstellhebel (30) versehen ist, der einen Rückstellhaken (32) enthält, der mit einer Entriegelungseingreiffläche (33) des Dreharms (25) in Eingriff steht, um den entriegelten Zustand des Kippmechanismus' (4) durch den Dreharm (25) zu halten,
der Rückstellhaken (32) dazu eingerichtet ist, in eine und aus einer Bewegungsschiene der Entriegelungseingreiffläche (33) beweglich zu sein; wobei der Rückstellhaken (32) mit der Entriegelungseingreiffläche (33) in Eingriff steht, wenn der Einstiegshebel (67) betätigt wird;
der Rückstellhaken (32) von der Entriegelungseingreiffläche (33) des Dreharms (25) beabstandet ist, wenn der Kipphebel (15) betätigt wird,
eine vorbestimmte Stellung des Rückstellehebels (30) mit einem Nockenvorsprung (34) versehen ist, und
wenn der Nockenvorsprung (34) mit dem Schaltbetätigungsteil (40) in Kontakt gebracht ist, der Rückstellhaken (32) die Bewegungsschiene der Entriegelungseingreiffläche (33) verlässt, so dass sich der Rückstellhaken (32) in die und aus der Bewegungsschiene der Entriegelungseingreiffläche (33) bewegt.

## Revendications

1. Siège de véhicule (1) comprenant :
une assise de siège (2) mobile en va-et-vient via un mécanisme à glissière (5) ;
un dossier de siège (3) dont l'angle d'inclinaison est réglable autour d'un axe central via un mécanisme d'inclinaison (4) ;
un mécanisme de blocage d'assise de siège (7) pour maintenir l'assise de siège (2) à la position normale ;
un mécanisme d'accessibilité (6) pour régler le mécanisme d'inclinaison (4) à un état débloqué et régler le mécanisme à glissière (5) à un état débloqué ; et
un levier d'accessibilité (67) pour actionner le mécanisme d'accessibilité (6), **caractérisé par** :
un mécanisme de bascule vers le haut (8) pour déplacer l'assise de siège (2) entre une position normale et une position verticale ;
un mécanisme de blocage mutuel (R) reliant fonctionnellement le mécanisme de bascule vers le haut (8) au mécanisme de réglage d'espace (6) ; et **caractérisé en outre en ce que** le mécanisme de bascule vers le haut (8) permet à l'assise de siège (2) d'être automatiquement rabattue dans la position verticale lorsque le mécanisme de blocage d'assise de siège (7) est libéré à partir de la position normale.

2. Siège de véhicule selon la revendication 1, dans lequel le levier d'accessibilité (67) est manipulé pour basculer le mécanisme d'inclinaison (4) vers l'état débloqué, et le dossier de siège (3) est tourné vers l'avant pour basculer le mécanisme à glissière (5) vers l'état débloqué.

3. Siège de véhicule (1) selon la revendication 1, dans lequel une partie du mécanisme d'accessibilité (6) est reliée à une partie du mécanisme de bascule vers le haut (8) via le mécanisme de blocage mutuel (R) de telle sorte que, lorsque le siège de véhicule (1) disposé à un état d'accessibilité est déplacé vers l'arrière jusqu'à une position d'origine du siège de véhicule (1) pour relever le dossier de siège (3), l'assise de siège (2) qui est mutuellement bloquée avec le dossier de siège (3) et est rabattue vers le haut par le relèvement du dossier de siège (3) est ramenée à une position d'assise d'origine.

4. Siège de véhicule (1) selon la revendication 1,
dans lequel le mécanisme de bascule vers le haut (8) inclut un axe (52) installant l'assise de siège (2) de manière rotative par rapport au mécanisme à glissière (5), un ressort de bascule vers le haut (52a) qui applique toujours une force à l'assise de siège (2) pour être à un état vertical, et le mécanisme de blocage d'assise de siège (7) maintenant l'assise de siège (2) à chaque position parmi une position d'assise et la position verticale,
un levier de basculement (41), qui est muni d'une partie d'actionnement de basculement (40) qui est déplacée en manipulant le levier d'accessibilité (67), est installé de manière rotative sur une partie du mécanisme de réglage d'espace (6), et
le levier de basculement (41) est relié via le mécanisme de blocage mutuel (R) à un axe de restriction (53) qui est agencé sur une patte de bascule vers le haut (51).

5. Siège de véhicule selon la revendication 4, dans lequel le mécanisme de blocage mutuel (R) inclut une plaque de bascule vers le haut (58) munie d'un trou de guidage (59) ayant un trou d'engagement (59b) dans lequel l'axe de restriction (53) s'engage de telle sorte que le trou d'engagement (59b) est mutuellement bloqué avec le mécanisme d'accessibilité (6), et un trou de mouvement (59a) dans lequel l'axe de restriction (53) est déplacé en exécutant uniquement un actionnement de bascule vers le haut, et
l'axe de restriction (53) est positionné dans le trou de guidage (59) dans une extrémité de la plaque de bascule vers le haut (58), et une autre extrémité de la plaque de bascule vers le haut (58) est reliée au levier de basculement (41).

6. Siège de véhicule selon la revendication 5, dans lequel la plaque de bascule vers le haut (58) est munie d'un ressort qui produit une force de telle sorte que l'axe de restriction (53) s'engage dans le trou d'engagement (59b), de telle sorte que dans un cas d'accessibilité, lorsque l'axe de restriction (53) s'engage dans le trou d'engagement (59b) et que le levier d'accessibilité (67) est manipulé pour incliner le dossier de siège (3) vers l'avant, la plaque de bascule vers le haut (58) est mutuellement bloquée avec le levier de basculement (41) pour rabattre l'assise de siège (2) vers le haut pour être à un état d'accessibilité,
lorsque le siège de véhicule (1) disposé à l'état d'accessibilité est déplacé vers l'arrière jusqu'à une position d'origine du siège de véhicule (1) pour relever le dossier de siège (3), la plaque de bascule vers le haut (58) est mutuellement bloquée avec le dossier de siège (3) pour ramener l'assise de siège (2) rabattue vers le haut à la position d'assise d'origine, et
lorsqu'une manipulation de rabattement est uniquement exécutée, l'axe de restriction (53) est mobile dans le trou de mouvement (59a), de telle sorte que l'axe de restriction (53) est séparé du levier de basculement (41).

7. Siège de véhicule selon la revendication 6,
dans lequel le trou de guidage (59) de la plaque de bascule vers le haut (58) est muni du trou d'engagement (59b) qui s'étend vers le bas depuis un milieu approximativement longitudinal du trou de mouvement (59a) qui a une forme de ligne droite, de telle sorte que le trou de guidage (59) forme une forme de T,
le trou d'engagement (59b) augmente en largeur vers le haut, et
dans le cas d'une accessibilité, lorsqu'une force prédéterminée ou une force supérieure est appliquée dans une direction dans laquelle l'assise de siège (2) est ramenée à un état d'origine de l'assise de siège (2), l'axe de restriction (53) est retiré du trou d'engagement (59b).

8. Siège de véhicule selon la revendication 7, dans lequel l'axe central (14) est muni d'un bras de rotation (25) qui est tourné en manipulant un levier d'inclinaison (15) ou le levier de réglage d'espace (61) de manière à débloquer le mécanisme d'inclinaison (4),
le levier d'inclinaison (15) fait tourner le bras de rotation (25) via un levier de liaison (17) ayant une fente (19),
un organe de manipulation pour le cas d'un réglage d'espace est configuré pour manipuler le bras de rotation (25) indépendamment du levier d'inclinaison (15),
la partie d'actionnement de basculement (40) est agencée à une extrémité du levier de basculement (41) qui est agencé de manière rotative sur une armature de support (10),
l'armature de support (10) est munie d'un trou dévié (43) qui inclut un trou de guidage (50) le long duquel la partie d'actionnement de basculement (40) est déplacée lorsque la partie d'actionnement de basculement (40) est dans le cas d'accessibilité, et un trou d'engagement (44) dans lequel la partie d'actionnement de basculement (40) s'engage lors du réglage de l'inclinaison, et
une autre extrémité du levier de basculement (41) est munie d'une surface de restriction de manipulation (45) qui déplace la partie d'actionnement de basculement (40) de telle sorte que la partie d'actionnement de basculement (40) s'engage dans le trou d'engagement (44) du trou dévié (43) par une saillie de restriction (46) du levier d'inclinaison (15).

9. Siège de véhicule selon la revendication 8, dans lequel le dossier de siège (3) est muni d'une fixation qui a une première surface de contact (56) qui déplace la partie d'actionnement de basculement (40) lorsque le dossier de siège (3) est incliné vers l'avant, et une seconde surface de contact (57) qui déplace la partie d'actionnement de basculement (40) lorsque le dossier de siège (3) est relevé,
l'armature de support (10) est munie d'un levier de mémoire (30) incluant un crochet de mémoire (32) qui s'engage avec une surface d'engagement de déblocage (33) du bras de rotation (25) pour maintenir l'état débloqué du mécanisme d'inclinaison (4) via le bras de rotation (25),
le crochet de mémoire (32) est configuré pour être mobile dans une piste de mouvement de la surface d'engagement de déblocage (33) et à l'extérieur de celle-ci ; le crochet de mémoire (32) s'engage avec la surface d'engagement de déblocage (33) lorsque le levier d'accessibilité (67) est manipulé ;
le crochet de mémoire (32) est espacé de la surface d'engagement de déblocage (33) du bras de rotation (25) lorsque le levier d'inclinaison (15) est manipulé,
une position prédéterminée du levier de mémoire (30) est prévue avec une saillie de came (34), et
lorsque la saillie de came (34) est amenée en contact avec la partie d'actionnement de basculement (40), le crochet de mémoire (32) quitte la piste de mouvement de la surface d'engagement de déblocage (33), de telle sorte que le crochet de mémoire (32) se déplace dans la piste de mouvement de la surface d'engagement de déblocage (33) et à l'extérieur de celle-ci.
